# EUROPEAN PATENT APPLICATION

(11) **EP 4 220 529 A1**
(43) Date of publication of application: **02.08.2023**
(21) Application number: 23153497.5
(22) Date of filing: 26.01.2023
(51) Int. Cl.: G06Q 40/04

(54) **INFORMATION PROVISION APPARATUS, INFORMATION PROVISION METHOD, AND PROGRAM**

(30) Priority: 31.01.2022 JP 2022012836
(71) Applicant: NEC Corporation, 108-8001 Tokyo (JP)
(72) Inventor: HORI, Masahiro, Tokyo, 108-8001 (JP); NISHIYAMA, Tomoyuki, Tokyo, 108-8001 (JP)
(74) Representative: Betten & Resch

(57) **Abstract**

To provide a technique for performing a company evaluation by a new unprecedented technique, the present invention provides an information provision apparatus 10 including: a reception unit 12 that receives an input that selects at least one from among a plurality of pieces of material information being a material for evaluating a target company; and an output unit 11 that outputs, when a plurality of pieces of the material information are selected, a screen that displays a plurality of selected pieces of the material information side by side.

## Description

### TECHNICAL FIELD

This application is based upon and claims the benefit of priority from Japanese patent application No. 2022-12836, filed on January 31, 2022, the disclosure of which is incorporated herein in its entirety by reference.

The present invention relates to an information provision apparatus, an information provision method, and a program.

### BACKGROUND ART

PTL 1 (International Patent Publication No. WO2013/179884) discloses a technique for extracting a company similar to an evaluation target company, based on a correlation vector of a financial indicator and a correlation vector of a non-financial indicator, estimating an indicator of stability of the evaluation target company, based on an indicator of stability of the extracted similar company, and outputting an estimation result.

### DISCLOSURE OF THE INVENTION

A challenge of the present invention is to provide a technique for performing a company evaluation by a new unprecedented technique.

The present invention provides an information provision apparatus including:
a reception means for receiving an input that selects at least one from among a plurality of pieces of material information being a material for evaluating a target company; and
an output means for outputting, when a plurality of pieces of the material information are selected, a screen that displays a plurality of selected pieces of the material information side by side.

Further, the present invention provides an information provision method including,
executing by a computer:
a reception step of receiving an input that selects at least one from among a plurality of pieces of material information being a material for evaluating a target company; and
an output step of outputting, when a plurality of pieces of the material information are selected, a screen that displays a plurality of selected pieces of the material information side by side.

Further, the present invention provides a program causing a computer to function as:
a reception means for receiving an input that selects at least one from among a plurality of pieces of material information being a material for evaluating a target company; and
an output means for outputting, when a plurality of pieces of the material information are selected, a screen that displays a plurality of selected pieces of the material information side by side.

Further, the present invention provides an information provision apparatus including
an output means for outputting a screen that displays information being a material for evaluating a target company, and indicating growth and deterioration predictions after a target period of the target company being computed based on at least one of a financial indicator in a target period, a technical indicator related to a change on a time axis of a financial indicator in and before a target period, and an expert indicator generated by processing a financial indicator in a target period by a predetermined rule.

Further, the present invention provides an information provision method including,
executing by a computer,
an output step of outputting a screen that displays information being a material for evaluating a target company, and indicating growth and deterioration predictions after a target period of the target company being computed based on at least one of a financial indicator in a target period, a technical indicator related to a change on a time axis of a financial indicator in and before a target period, and an expert indicator generated by processing a financial indicator in a target period by a predetermined rule.

Further, the present invention provides a program causing a computer to function as
an output means for outputting a screen that displays information being a material for evaluating a target company, and indicating growth and deterioration predictions after a target period of the target company being computed based on at least one of a financial indicator in a target period, a technical indicator related to a change on a time axis of a financial indicator in and before a target period, and an expert indicator generated by processing a financial indicator in a target period by a predetermined rule.

The present invention achieves a technique for performing a company evaluation by a new unprecedented technique.

### BRIEF DESCRIPTION OF THE DRAWINGS

Fig. 1 is a diagram illustrating one example of a hardware configuration of an information provision apparatus.
Fig. 2 is a diagram illustrating one example of a functional block diagram of the information provision apparatus.
Fig. 3 is a diagram schematically illustrating one example of a deterioration prediction rule.
Fig. 4 is a diagram schematically illustrating one example of a growth prediction rule.
Fig. 5 is a diagram schematically illustrating one example of a result of a deterioration prediction to be output.
Fig. 6 is a diagram schematically illustrating one example of a result of a growth prediction to be output.
Fig. 7 is a diagram schematically illustrating one example of a screen to be output.
Fig. 8 is a diagram schematically illustrating one example of one piece of material information.
Fig. 9 is a diagram schematically illustrating one example of an evaluation score computation rule.
Fig. 10 is a diagram schematically illustrating one example of reference target information.
Fig. 11 is a diagram for describing grouping processing.
Fig. 12 is a diagram schematically illustrating one example of group information.
Fig. 13 is a diagram schematically illustrating one example of one piece of material information.
Fig. 14 is a diagram illustrating one example of a functional block diagram of an information provision apparatus.

### DESCRIPTION OF EMBODIMENTS

Hereinafter, example embodiments of the present invention will be described with reference to the drawings. Note that, in all of the drawings, a similar component has a similar reference sign, and description thereof will be appropriately omitted.

### <First Example Embodiment>

### "Outline"

An information provision apparatus according to the present example embodiment outputs a screen that displays information being a material for evaluating a target company, and indicating growth and deterioration predictions after a target period of the target company being computed based on at least one of a financial indicator in the target period, a technical indicator related to a change on a time axis of the financial indicator in and before the target period, and an expert indicator generated by processing the financial indicator in the target period by a predetermined rule. A user can perform an evaluation of a target company, based on such information.

### "Hardware Configuration"

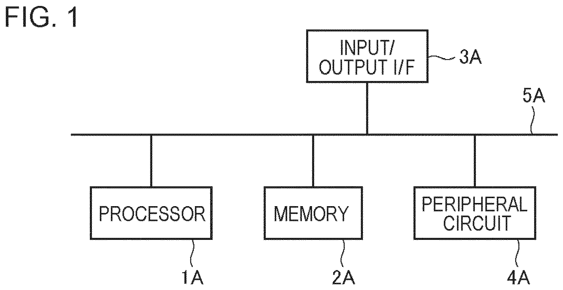

Next, one example of a hardware configuration of the information provision apparatus will be described. Fig. 1 is a diagram illustrating a hardware configuration example of the information provision apparatus. Each functional unit of the information provision apparatus is achieved by any combination of hardware and software concentrating on a central processing unit (CPU) of any computer, a memory, a program loaded into the memory, a storage unit (that can also store a program downloaded from a storage medium such as a compact disc (CD), a server on the Internet, and the like in addition to a program previously stored at a stage of shipping of an apparatus) such as a hard disk that stores the program, and a network connection interface. Then, various modification examples of an achievement method and an apparatus thereof are understood by a person skilled in the art.

As illustrated in Fig. 1, the information provision apparatus includes a processor 1A, a memory 2A, an input/output interface 3A, a peripheral circuit 4A, and a bus 5A. Various modules are included in the peripheral circuit 4A. The information provision apparatus may not include the peripheral circuit 4A. Note that, the information provision apparatus may be formed of a plurality of apparatuses separated physically and/or logically, or may be formed of one apparatus integrated physically and logically. When the information provision apparatus is formed of a plurality of apparatuses separated physically and/or logically, each of the plurality of apparatuses can include the hardware configuration described above.

The bus 5A is a data transmission path for the processor 1A, the memory 2A, the peripheral circuit 4A, and the input/output interface 3A to transmit and receive data to and from one another. The processor 1A is an arithmetic processing apparatus such as a CPU and a graphics processing unit (GPU), for example. The memory 2A is a memory such as a random access memory (RAM) and a read only memory (ROM), for example. The input/output interface 3A includes an interface for acquiring information from an input apparatus, an external apparatus, an external server, an external sensor, and the like, an interface for outputting information to an output apparatus, an external apparatus, an external server, and the like, and the like. The input apparatus is, for example, a keyboard, a mouse, a microphone, and the like. The output apparatus is, for example, a display, a speaker, a printer, a mailer, and the like. The processor 1A can output an instruction to each of modules, and perform an arithmetic operation, based on an arithmetic result of the modules.

### "Functional Configuration"

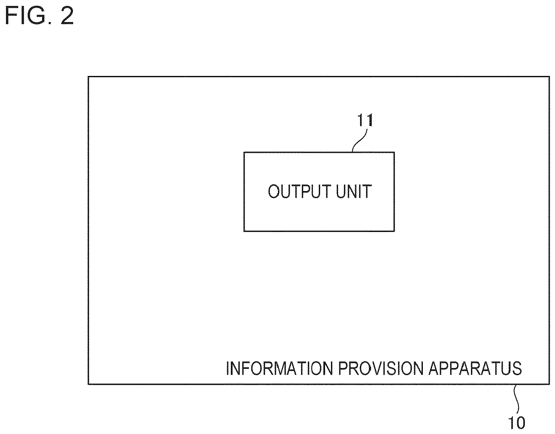

Next, one example of a functional configuration of the information provision apparatus will be described. Fig. 2 illustrates one example of a functional block diagram of an information provision apparatus 10. As illustrated, the information provision apparatus 10 includes an output unit 11.

The output unit 11 outputs a screen that displays information being a material for evaluating a target company, and indicating growth and deterioration predictions after a target period of the target company being computed based on at least one of a financial indicator in the target period, a technical indicator related to a change on a time axis of the financial indicator in and before the target period, and an expert indicator generated by processing the financial indicator in the target period by a predetermined rule.

First, the target period, the financial indicator, the technical indicator, and the expert indicator will be described.

The "target period" is determined by a unit of a fiscal year, a half term, a quarter, and the like. For example, when a target company is evaluated at a point in time at which the 2021 fiscal year ends, the 2021 fiscal year can be set as the target period.

The "financial indicator" is an indicator indicating a financial state in the target period. The financial indicator can include various indicators being widely used. For example, the financial indicator can include at least one of a sales ordinary profit ratio, a capital current net profit ratio, a sales gross profit ratio, a sales operating profit ratio, a SGA ratio, a gross capital ordinary profit ratio, a return on assets, a gross capital turnover ratio, a current ratio, a capital ratio, a quick ratio, a debt ratio, a fixed ratio, a fixed long-term conformity ratio, an operating cash flow, an investment cash flow, a financial cash flow, labor productivity, capital productivity, a labor distribution ratio, a sales added value ratio, a tangible fixed asset turnover ratio, an operating profit growth ratio, a gross capital growth ratio, a sales growth ratio, a capital growth ratio, a sales R&D cost ratio, and an employee increase ratio.

The "technical indicator" is related to a change on a time axis of the financial indicator in and before the target period of each company. There are various numbers of years of data being referred for the technical indicator, but the technical indicator is preferably data related to a change on a time axis of the financial indicator for four years or more including the target period and a period before the target period. In this way, a company evaluation by an unprecedented technique is achieved.

The technical indicator includes at least one of a trend-based indicator and an oscillator-based indicator, for example.

The trend-based indicator is an indicator indicating a flow of a stock market, and can include various indicators being widely used. For example, the trend-based indicator can include at least one of a simple moving average, an exponential moving average, the Ichimoku Cloud, Bollinger Bands, a zigzag chart, a linear regression trend, HL bands, an envelope, the Keltner channel, Chaos Alligator, a candlestick chart, a three line break chart, a Kagi chart, balance of power, the Aroon indicator, Heikin Ashi, and a point and figure.

The oscillator-based indicator is an indicator indicating an overbought state and an oversold state of a stock, and can include various indicators being widely used. For example, the oscillator-based indicator can include at least one of a Stochastic oscillator, a moving average convergence divergence (MACD), a relative strength index (RSI), a momentum, a directional movement index, a divergence ratio, a divergence price/average, a TD range expansion index, an average directional indicator, historical volatility, Williams%R, a psychological line, a Coppock index, a rank correlation index, a change ratio, a moving average oscillator, an ultimate oscillator, Aroon UP/DOWN, an Aroon oscillator, a money flow index, a product channel index, a volume ratio, a Shinohara intensity ratio, performance, and an anti-watch curve.

The "expert indicator" is an indicator that is not included in the financial indicator and the technical indicator described above, and is an indicator generated by processing the financial indicator in the target period of a target company by a predetermined rule. The indicator may be an indicator being widely known, and may be an indicator being newly created. An indicator being originally created and used by an expert in a company evaluation and the like may be used as the expert indicator. For example, the expert indicator can include at least one of an interest coverage ratio, an imbalance between sales and credit sales (whether a ratio of a trade receivable change ratio to a sales change ratio is increasing for two consecutive terms), and a payment interest coefficient (whether a state of a loan at a rate of interest at which a payment interest itself is high continues for a predetermined period).

Next, one example of processing of predicting a growth and deterioration after a target period of a target company, based on at least one of the financial indicator, the technical indicator, and the expert indicator. Note that, the processing described below is merely one example, which is not limited thereto. A growth and deterioration after a target period of a target company may be predicted based on at least one of the financial indicator, the technical indicator, and the expert indicator, and another technique may be adopted.

The information provision apparatus 10 may perform the processing of predicting a growth and deterioration after a target period of a target company. In addition, an apparatus different from the information provision apparatus 10 may perform the processing, and a result of the processing may be input to the information provision apparatus 10. Hereinafter, an apparatus that performs the processing is referred to as a growth/deterioration prediction apparatus.

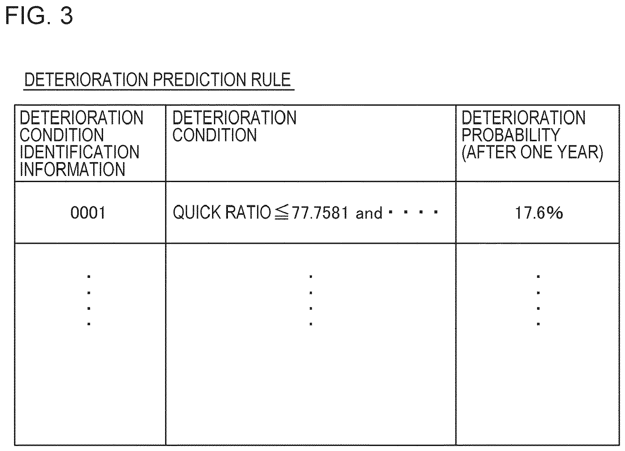

The growth/deterioration prediction apparatus performs a deterioration prediction, based on a deterioration prediction rule as illustrated in Fig. 3. By analyzing past data and the like, the deterioration prediction rule as illustrated is created in advance and registered in the growth/deterioration prediction apparatus.

In the illustrated deterioration prediction rule, deterioration condition identification information, a deterioration condition, and a deterioration probability are associated with one another.

The "deterioration condition identification information" is information that identifies a plurality of deterioration conditions from each other.

The "deterioration condition" is defined based on at least one of the financial indicator, the technical indicator, and the expert indicator. For example, the deterioration condition is defined as "quick ratio ≤ 77.7581 and ..." as illustrated.

The "deterioration probability" indicates a probability that a company satisfying each deterioration condition is degraded after a target period. Note that, Fig. 3 illustrates the deterioration probability after one year, but may further illustrate the deterioration probability after two years, after three years, and the like.

The growth/deterioration prediction apparatus detects a deterioration condition satisfied by a target company, based on at least one of the financial indicator, the technical indicator, and the expert indicator of the target company. Then, the growth/deterioration prediction apparatus decides a deterioration probability associated with the detected deterioration condition as a deterioration probability after a target period of the target company. Note that, when a plurality of deterioration conditions satisfied by the target company are detected, a statistic (for example: a maximum value, a minimum value, a medium value, an average value, a mode, and the like) in a deterioration probability associated with each of the plurality of detected deterioration conditions can be decided as a deterioration probability after a target period of the target company.

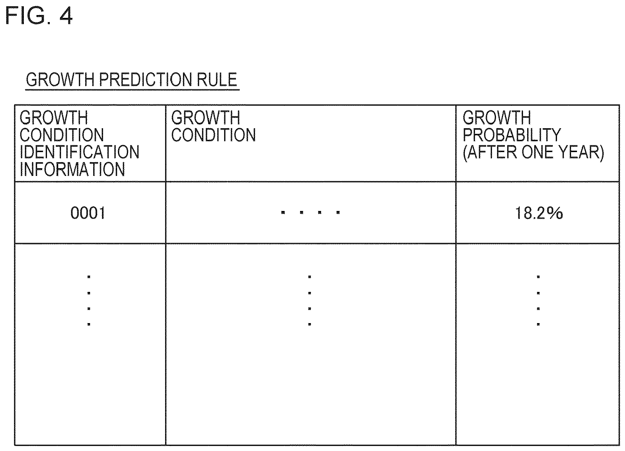

Similarly, the growth/deterioration prediction apparatus performs a growth prediction, based on a growth prediction rule as illustrated in Fig. 4. By analyzing past data and the like, the growth prediction rule as illustrated is created in advance and registered in the growth/deterioration prediction apparatus.

In the illustrated growth prediction rule, growth condition identification information, a growth condition, and a growth probability are associated with one another.

The "growth condition identification information" is information that identifies a plurality of growth conditions from each other.

The "growth condition" is defined based on at least one of the financial indicator, the technical indicator, and the expert indicator.

The "growth probability" indicates a probability that a company satisfying each growth condition grows after a target period. Note that, Fig. 4 illustrates the growth probability after one year, but may further illustrate the growth probability after two years, after three years, and the like.

The growth/deterioration prediction apparatus detects a growth condition satisfied by a target company, based on at least one of the financial indicator, the technical indicator, and the expert indicator of the target company. Then, the growth/deterioration prediction apparatus decides a growth probability associated with the detected growth condition as a growth probability after a target period of the target company. Note that, when a plurality of growth conditions satisfied by the target company are detected, a statistic (for example: a maximum value, a minimum value, a medium value, an average value, a mode, and the like) in a growth probability associated with each of the plurality of detected growth conditions can be decided as a growth probability after a target period of the target company.

The output unit 11 outputs a screen that displays information indicating growth and deterioration predictions after a target period of a target company being computed by the processing as described above, for example. The output unit 11 can output the screen by using an output means such as a display, a projection apparatus, a printer, and a mailer. Further, the output unit 11 may transmit data about the screen to another terminal, and display the screen on the another terminal.

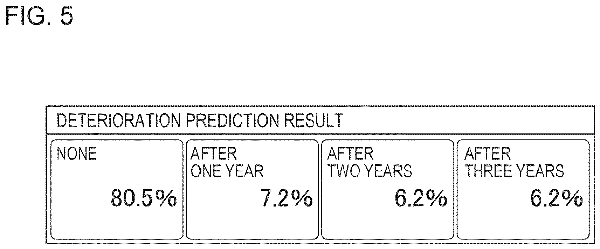

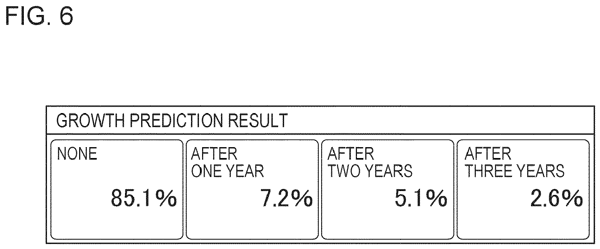

Fig. 5 illustrates one example of a screen that displays information indicating a deterioration prediction after a target period. Fig. 6 illustrates one example of a screen that displays information indicating a growth prediction after a target period. Fig. 5 illustrates a deterioration probability after one year, two years, and three years. A probability indicated in a column of "none" in Fig. 5 is a value acquired by subtracting a total value of the deterioration probability after one year, two years, and three years from 100%.

### "Advantageous Effect"

The information provision apparatus 10 according to the present example embodiment can output a screen that displays information indicating growth and deterioration predictions after a target period of a target company being computed based on at least one of the financial indicator, the technical indicator, and the expert indicator described above. A user can perform an evaluation of a target company, based on such information.

### <Second Example Embodiment>

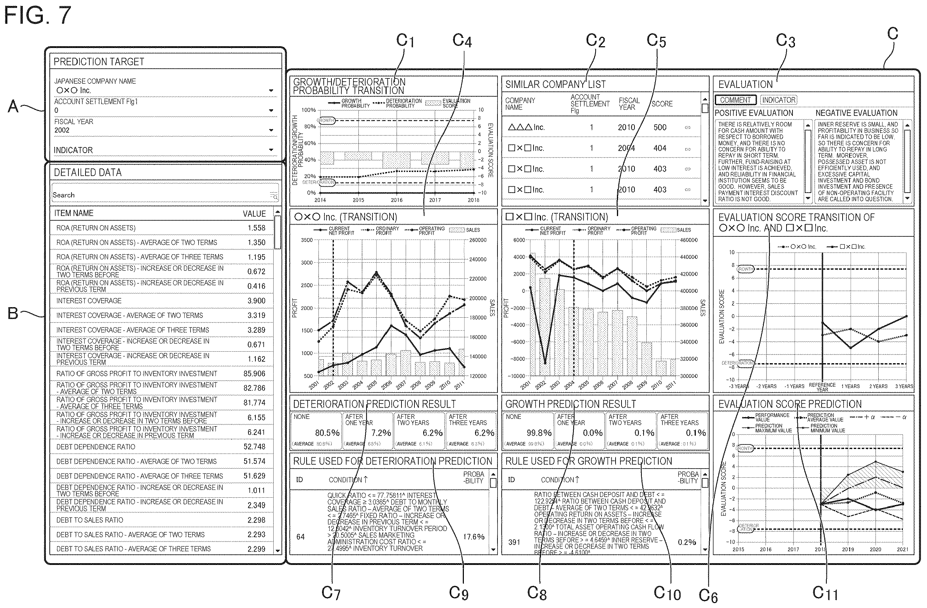

As illustrated in Fig. 7, an output unit 11 of an information provision apparatus 10 according to the present example embodiment can output a screen that displays, side by side, a plurality of pieces of material information being a material for evaluating a target company. Note that, the example illustrated in Fig. 7 is merely one example, and the output unit 11 can output a screen that displays, side by side, at least two of the plurality of pieces of material information illustrated in Fig. 7.

Hereinafter, the screen illustrated in Fig. 7 will be described in detail. As illustrated, the screen illustrated in Fig. 7 has a region A, a region B, and a region C.

In the region A, information about the target company is displayed. Specifically, a name of the target company, a target period (fiscal year), and the like are displayed. A user can specify them.

In the region B, at least one specific value of a financial indicator, a technical indicator, and an expert indicator of the target company is displayed.

In the region C, the plurality of pieces of material information are displayed side by side. In the illustrated example, 11 pieces of material information C₁ to C₁₁ are displayed side by side. Hereinafter, each of the pieces of material information will be described in detail.

### "Material Information C₁"

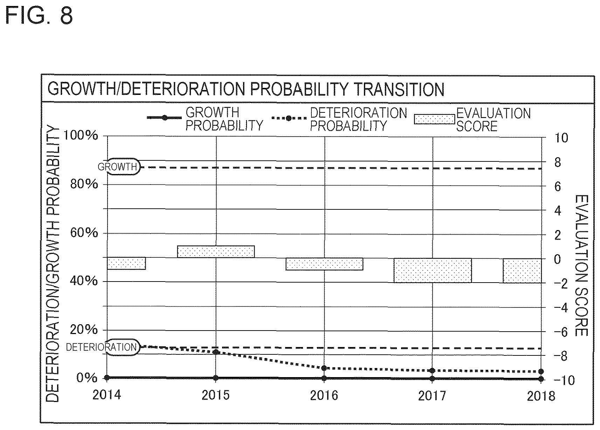

The material information C₁ indicates a transition of a growth probability of the target company, a transition of a deterioration probability, and a transition of an evaluation score. One example of the material information C₁ is illustrated in Fig. 8. Note that, the material information C₁ illustrated in Fig. 7 and the material information C₁ illustrated in Fig. 8 have contents different from each other.

The growth probability and the deterioration probability are as described above. In the illustrated example, the growth and deterioration probabilities of a (M+1) fiscal year being estimated with an M fiscal year as a target period are plotted on a graph. In other words, the growth and deterioration probabilities of the 2014 fiscal year on the graph are the growth and deterioration probabilities of the 2014 fiscal year being estimated with the 2013 fiscal year as a target period, and the growth and deterioration probabilities of the 2015 fiscal year on the graph are the growth and deterioration probabilities of the 2015 fiscal year being estimated with the 2014 fiscal year as a target period.

Next, the evaluation score will be described. The evaluation score is computed based on at least one of the financial indicator, the technical indicator, and the expert indicator. Note that, processing described below is merely one example, which is not limited thereto. The evaluation score of the target company may be computed based on at least one of the financial indicator, the technical indicator, and the expert indicator, and another technique may be adopted.

The information provision apparatus 10 may perform processing of computing the evaluation score. In addition, an apparatus different from the information provision apparatus 10 may perform the processing, and a result of the processing may be input to the information provision apparatus 10. Hereinafter, an apparatus that performs the processing is referred to as an evaluation score computation apparatus.

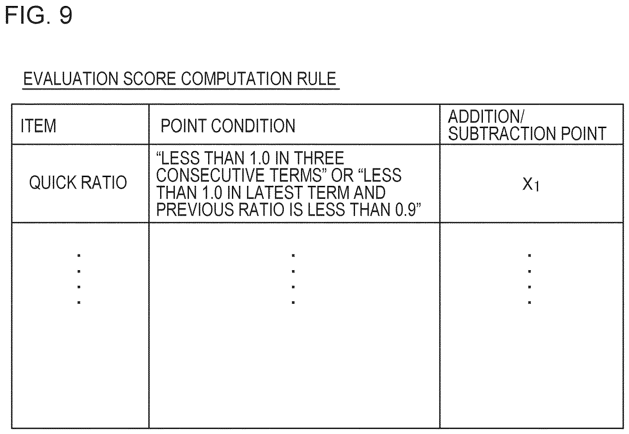

The evaluation score computation apparatus computes the evaluation score, based on an evaluation score computation rule as illustrated in Fig. 9. By analyzing past data and the like, the evaluation score as illustrated is created in advance and registered in the evaluation score computation apparatus.

In the illustrated evaluation score computation rule, an item, a point condition, and an addition/subtraction point are associated with one another.

The "item" is an item included in any of the financial indicator, the technical indicator, and the expert indicator.

The "point condition" is defined based on a value and a transition of each item. For example, as illustrated, the "point condition" is defined as "less than 1.0 in three consecutive terms" or "less than 1.0 in latest term and previous ratio is less than 0.9".

The "addition/subtraction point" is a point to be added or subtracted when each point condition is satisfied.

The evaluation score computation apparatus detects a point condition satisfied by a target company, based on at least one of the financial indicator, the technical indicator, and the expert indicator of the target company. Then, the evaluation score computation apparatus adds up an addition/subtraction point associated with one or a plurality of the detected point conditions, and computes an evaluation score in a target period of the target company.

The evaluation score of the 2014 fiscal year on the graph illustrated in Fig. 8 is the evaluation score of the 2014 fiscal year being computed with the 2014 fiscal year as a target period, and the evaluation score of the 2015 fiscal year on the graph is the evaluation score of the 2015 fiscal year being computed with the 2015 fiscal year as a target period.

### "Material Information C₂"

Returning to Fig. 7, the material information C₂ is information that displays a list of at least one another company (hereinafter, a "similar company") whose state being determined based on at least one of the financial indicator, the technical indicator, and the expert indicator is similar to a target fiscal year of the target company by equal to or more than a predetermined level. As illustrated, a plurality of similar companies may be displayed in ranking in a descending order of a degree of similarity to the target company.

Herein, processing of extracting a similar company will be described. Note that, the processing described below is merely one example, which is not limited thereto. A similar company may be extracted based on at least one of the financial indicator, the technical indicator, and the expert indicator, and another technique may be adopted.

The information provision apparatus 10 may perform the processing of extracting a similar company. In addition, an apparatus different from the information provision apparatus 10 may perform the processing, and a result of the processing may be input to the information provision apparatus 10. Hereinafter, an apparatus that performs the processing is referred to as a similar company extraction apparatus.

The similar comparison extraction apparatus extracts a similar company from a plurality of reference targets.

The "reference target" is data about one fiscal year of one company. For example, data about the 2020 fiscal year of ∘∘∘ Inc. are one reference target, data about the 2019 fiscal year of ∘∘∘ Inc. are another one reference target, and data about the 2020 fiscal year of ××× Inc. are another one reference target. In this way, one company is handled by being divided for each fiscal year. In this case, as a similar company, one company may be extracted for a plurality of times. For example, ∘∘∘ Inc. of the 2019 fiscal year and ∘∘∘ Inc. of the 2020 fiscal year may be separately extracted as similar companies.

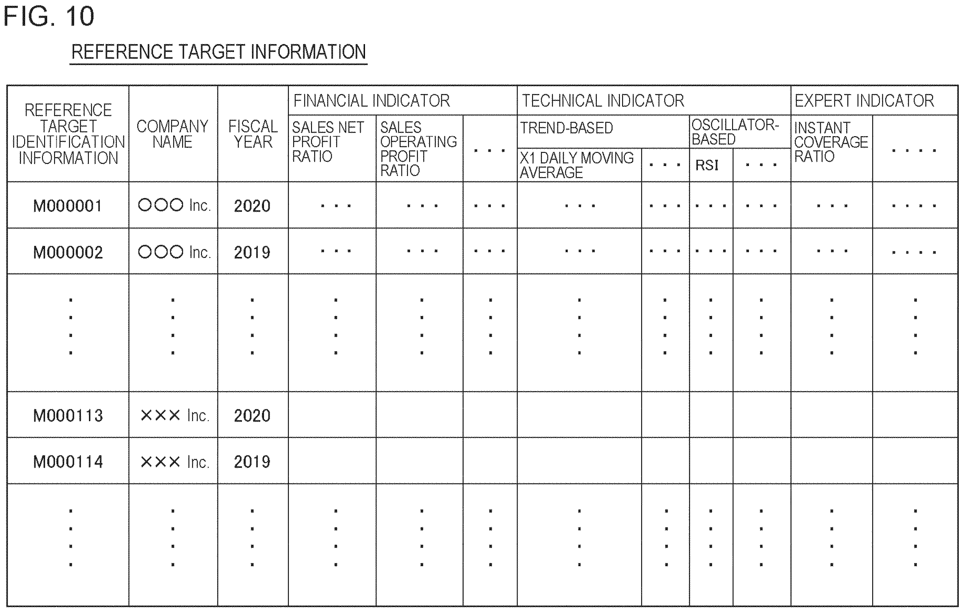

Fig. 10 schematically illustrates one example of information processed by the similar company extraction apparatus. Illustrated reference target information includes information about a plurality of reference targets. Information about each reference target includes reference target identification information, a company name, a fiscal year, and data.

The "reference target identification information" is information that identifies a plurality of reference targets from each other.

The "company name" is a name of a company associated with each reference target.

The "fiscal year" is a fiscal year associated with each reference target.

The "data" are data about each reference target. As illustrated, the data about each reference target includes the financial indicator, the technical indicator, and the expert indicator.

The similar company extraction apparatus divides a plurality of reference targets into groups (performs grouping on similar targets together) by using a technique of clustering (machine learning), based on a degree of similarity of the financial indicator, the technical indicator, and the expert indicator described above. Note that, the similar company extraction apparatus may perform grouping by using a technique of ensemble learning. In other words, the similar company extraction apparatus may perform grouping by using each of a plurality of kinds of models, and adopt a result acquired by taking a majority vote on a result of the grouping by the plurality of kinds of models. Since clustering and ensemble learning are widely known techniques, description herein will be omitted.

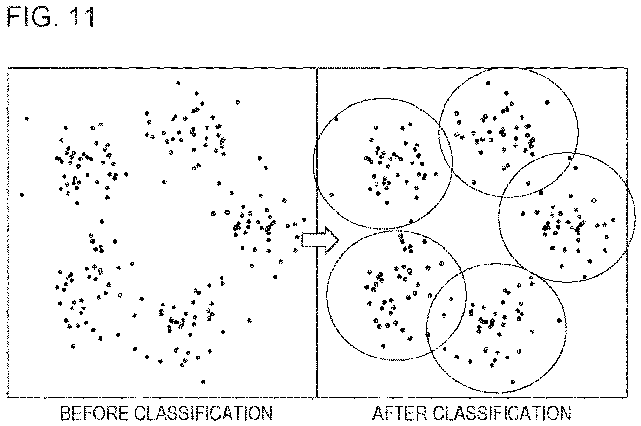

By the grouping processing by the similar company extraction apparatus, as illustrated in Fig. 11, a plurality of reference targets are subjected to grouping. One dot in Fig. 11 is associated with one reference target.

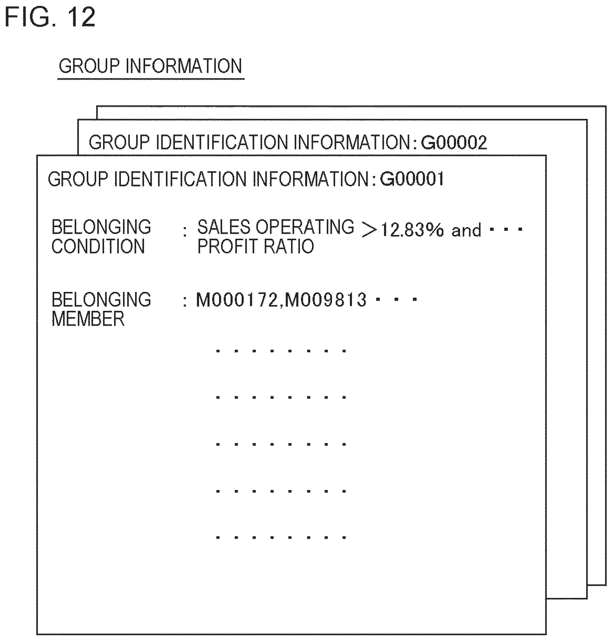

Further, by the grouping processing by the similar company extraction apparatus, group information about each of a plurality of groups as illustrated in Fig. 12 is created and stored in a storage apparatus of the similar company extraction apparatus. The group information indicates a belonging condition being a condition for belonging to each group, and a belonging member being a member who belongs to each group. The belonging condition is expressed by using the financial indicator, the technical indicator, and the expert indicator. Both of the belonging condition and the belonging member are information acquired as a result of clustering described above.

Next, the similar company extraction apparatus determines a group to which the target company belongs from among the groups described above. For example, the similar company extraction apparatus may determine a group (group in which the target company satisfies the belonging condition) to which the target company belongs by deciding whether the target company satisfies the belonging condition (see Fig. 12) of each group. Then, the similar company extraction apparatus determines, as a similar company, a reference target belonging to the determined group.

### "Material Information C₃"

Returning to Fig. 7, the material information C₃ is a comment that evaluates a state of a target fiscal year of the target company. The comment can include a positive evaluation and a negative evaluation. The comment is created based on at least one of the financial indicator, the technical indicator, and the expert indicator.

The comment may be created by a person. Then, the comment created by the person may be input to the information provision apparatus 10.

In addition, the comment may be created by a computer by using a technique such as machine learning. In this case, the information provision apparatus 10 may create the comment. In addition, an apparatus different from the information provision apparatus 10 may create the comment, and the created comment may be input to the information provision apparatus 10.

### "Material Information C₄"

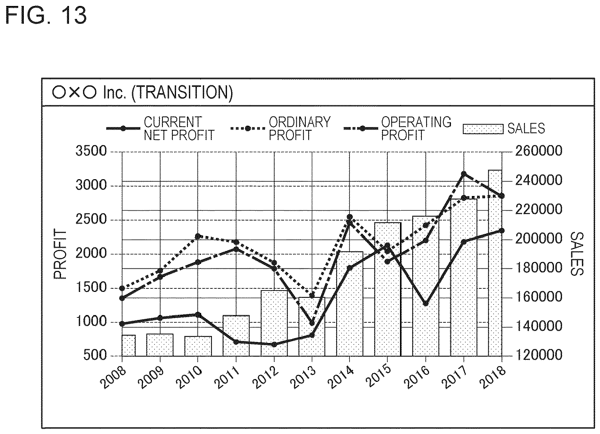

The material information C₄ indicates various types of data about the target company. One example of the material information C₄ is illustrated in Fig. 13. Note that, the material information C₄ illustrated in Fig. 7 and the material information C₄ illustrated in Fig. 13 have contents different from each other.

In the example illustrated in Fig. 13, transitions of a current net profit, an ordinary profit, an operating profit, and sales of a target company are indicated. The material information C4 may indicate a transition of another item. Further, a user may be able to specify an item and a period to be displayed.

### "Material Information C₅"

The material information C₅ indicates various types of data about the similar company. For example, data about a similar company selected by a user from among the plurality of similar companies displayed in the list in the material information C₂ may be displayed in the material information C₅. In addition, data about a similar company in a first place in similarity degree ranking among the plurality of similar companies displayed in the list in the material information C₂ may be displayed in the material information C₅.

In the example illustrated in Fig. 7, transitions of a current net profit, an ordinary profit, an operating profit, and sales of the similar company are indicated. The material information C₅ may indicate a transition of another item. Further, a user may be able to specify an item and a period to be displayed. Further, the same item and period as those in the material information C₄ may be automatically specified. In this case, various types of data about the target company indicated in the material information C₄ and various types of data about the similar company indicated in the material information C₅ are easily compared.

### "Material Information C₆"

The material information C₆ indicates a transition of the evaluation score of the target company and the similar company. The evaluation score is as described above. A transition of the evaluation score of the target company and a transition of the evaluation score of the similar company are displayed on the same graph and can thus be compared with each other. The similar company having the data being displayed herein may be able to be specified by a user. For example, a user may be able to specify one or a plurality of the similar companies displayed in the list in the material information C₂. In addition, a predetermined number of similar companies in a high rank in the similarity degree ranking among the plurality of similar companies displayed in the list in the material information C₂ may be automatically specified as companies having data being displayed in the material information C₆.

### "Material Information C₇"

The material information C₇ indicates a deterioration prediction after the target period of the target company. The information is as described in the first example embodiment.

### "Material Information C₈"

The material information C₈ indicates a growth prediction after the target period of the target company. The information is as described in the first example embodiment.

### "Material Information C₉"

The material information C₉ indicates a basis of the deterioration prediction indicated in the material information C₇. Specifically, a deterioration condition satisfied by the target company is displayed. As described in the first example embodiment, the deterioration condition is defined based on at least one of the financial indicator, the technical indicator, and the expert indicator.

### "Material Information C₁₀"

The material information C₁₀ indicates a basis of the growth prediction indicated in the material information C₈. Specifically, a growth condition satisfied by the target company is displayed. As described in the first example embodiment, the growth condition is defined based on at least one of the financial indicator, the technical indicator, and the expert indicator.

### "Material Information C₁₁"

The material information C₁₁ indicates a prediction of a transition of various types of data after the target period of the target company. In Fig. 7, a prediction of the evaluation score is indicated, but a prediction of other data may be indicated. For example, a prediction of the financial indicator, the technical indicator, the expert indicator, and the like may be indicated.

Herein, processing of predicting a transition of various types of data after a target period of a target company will be described. Note that, the processing described below is merely one example, which is not limited thereto.

The information provision apparatus 10 may perform the processing of predicting a transition of various types of data after a target period of a target company. In addition, an apparatus different from the information provision apparatus 10 may perform the processing, and a result of the processing may be input to the information provision apparatus 10. Hereinafter, an apparatus that performs the processing is referred to as a transition prediction apparatus.

The transition prediction apparatus may perform the prediction described above, based on the data about the similar company described above. For example, the transition prediction apparatus may create information indicating a trend of a transition of data after an associated fiscal year of a similar company, based on data after the associated fiscal year (after the 2013 fiscal year when ∘∘∘ Inc. of the 2013 fiscal year is the similar company) of the similar company. For example, the transition prediction apparatus may compute an average of transitions of data after an associated fiscal year of a plurality of similar companies. Then, the transition prediction apparatus may predict a transition of various types of data after a target period of a target company on an assumption that various types of data after the target period of the target company transition with the same trend as the transition of the data after the associated fiscal year of the similar companies.

Another configuration of the information provision apparatus 10 according to the present example embodiment is similar to that in the first example embodiment.

The information provision apparatus 10 according to the present example embodiment can achieve an advantageous effect similar to that in the first example embodiment. Further, the information provision apparatus 10 according to the present example embodiment can display, side by side, a plurality of pieces of characteristic material information as described above. As a result, a user can perform an evaluation of a target company, based on such information.

### <Third Example Embodiment>

An information provision apparatus 10 according to the present example embodiment has a function of allowing a user to customize material information to be displayed on a screen, an arrangement of the material information, and the like.

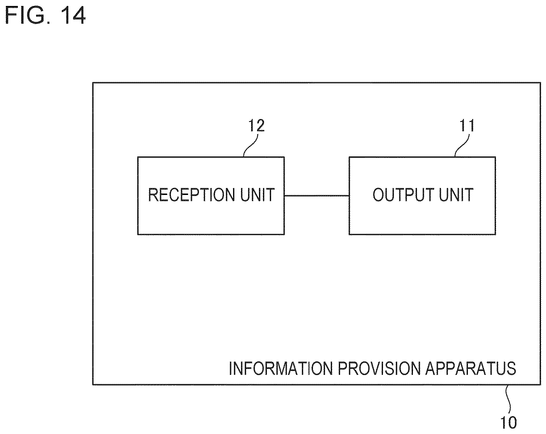

Fig. 14 illustrates one example of a functional block diagram of the information provision apparatus 10 according to the present example embodiment. As illustrated, the information provision apparatus 10 includes an output unit 11 and a reception unit 12.

The reception unit 12 receives an input that selects at least one from among a plurality of pieces of material information being a material for evaluating a target company. The output unit 11 creates and outputs a screen that displays at least one selected piece of the material information. When the plurality of pieces of material information are selected, the output unit 11 creates and outputs a screen (see Fig. 7) that displays the plurality of selected pieces of material information side by side.

Further, the reception unit 12 may receive a user input related to an arrangement on a screen of the plurality of selected pieces of material information, i.e., a user input that specifies an arrangement order of the plurality of pieces of material information, a position on a screen in which each piece of the material information is disposed, and the like. The output unit 11 creates and outputs a screen (see Fig. 7) that displays, side by side, at least one piece of the material information by the method specified by the user input.

Further, the reception unit 12 may receive a user input that specifies a size on a screen of each of the plurality of selected pieces of material information. The output unit 11 creates and outputs a screen (see Fig. 7) that displays, side by side, at least one piece of the material information in the size specified by the user input.

Another configuration of the information provision apparatus 10 according to the present example embodiment is similar to that in the first and second example embodiments.

The information provision apparatus 10 according to the present example embodiment can achieve an advantageous effect similar to that in the first and second example embodiments. Further, the information provision apparatus 10 according to the present example embodiment has a function of allowing a user to customize material information displayed on a screen, an arrangement of the material information, and the like. With such an information provision apparatus 10 according to the present example embodiment, a user can create a screen that displays necessary information side by side by a preferred technique, and evaluate a target company while viewing the screen.

While the example embodiments of the present invention have been described with reference to the drawings, the example embodiments are only exemplification of the present invention, and various configurations other than the above-described example embodiments can also be employed. The configurations of the example embodiments described above may be combined together, or a part of the configuration may be replaced with another configuration. Further, various modifications may be made in the configurations of the example embodiments described above without departing from the scope of the present invention. Further, the configurations and the processing disclosed in each of the example embodiments and the modification examples described above may be combined together.

Note that, in the present specification, "acquisition" includes at least any one of "acquisition of data stored in another apparatus or a storage medium by its own apparatus (active acquisition)", based on a user input or an instruction of a program, such as reception by making a request or an inquiry to another apparatus and reading by accessing to another apparatus or a storage medium, "inputting of data output to its own apparatus from another apparatus (passive acquisition)", based on a user input or an instruction of a program, such as reception of data to be distributed (transmitted, push-notified, or the like) and acquisition by selection from among received data or received information, and "creation of new data by editing data (such as texting, sorting of data, extraction of a part of data, and change of a file format) and the like, and acquisition of the new data".

A part or the whole of the above-described example embodiment may also be described in supplementary notes below, which is not limited thereto.
1. An information provision apparatus, including:
   a reception means for receiving an input that selects at least one from among a plurality of pieces of material information being a material for evaluating a target company; and
   an output means for outputting, when a plurality of pieces of the material information are selected, a screen that displays a plurality of selected pieces of the material information side by side.
2. The information provision apparatus according to supplementary note 1, wherein
   a plurality of pieces of the material information include information indicating a transition of an evaluation score for each target period of the target company being computed based on at least one of a financial indicator in a target period, a technical indicator related to a change on a time axis of a financial indicator in and before a target period, and an expert indicator generated by processing a financial indicator in a target period by a predetermined rule.
3. The information provision apparatus according to supplementary note 1 or 2, wherein
   a plurality of pieces of the material information include information indicating growth and deterioration predictions after a target period of the target company being computed based on at least one of a financial indicator in a target period, a technical indicator related to a change on a time axis of a financial indicator in and before a target period, and an expert indicator generated by processing a financial indicator in a target period by a predetermined rule.
4. The information provision apparatus according to supplementary note 3, wherein
   a plurality of pieces of the material information include information indicating a basis of growth and deterioration predictions after a target period of the target company by using at least one of a financial indicator in a target period, a technical indicator related to a change on a time axis of a financial indicator in and before a target period, and an expert indicator generated by processing a financial indicator in a target period by a predetermined rule.
5. The information provision apparatus according to any of supplementary notes 1 to 4, wherein
   a plurality of pieces of the material information include information indicating at least one another company whose state being determined based on at least one of a financial indicator in a target period, a technical indicator related to a change on a time axis of a financial indicator in and before a target period, and an expert indicator generated by processing a financial indicator in a target period by a predetermined rule is similar to the target company by equal to or more than a predetermined level.
6. The information provision apparatus according to any of supplementary notes 1 to 5, wherein
   a plurality of pieces of the material information include information comparing, with data about the target company, data about another company whose state being determined based on at least one of a financial indicator in a target period, a technical indicator related to a change on a time axis of a financial indicator in and before a target period, and an expert indicator generated by processing a financial indicator in a target period by a predetermined rule is similar to the target company by equal to or more than a predetermined level.
7. An information provision method, including,
   executing by a computer:
   a reception step of receiving an input that selects at least one from among a plurality of pieces of material information being a material for evaluating a target company; and
   an output step of outputting, when a plurality of pieces of the material information are selected, a screen that displays a plurality of selected pieces of the material information side by side.
8. A program causing a computer to function as:
   a reception means for receiving an input that selects at least one from among a plurality of pieces of material information being a material for evaluating a target company; and
   an output means for outputting, when a plurality of pieces of the material information are selected, a screen that displays a plurality of selected pieces of the material information side by side.
9. An information provision apparatus, including
   an output means for outputting a screen that displays information being a material for evaluating a target company, and indicating growth and deterioration predictions after a target period of the target company being computed based on at least one of a financial indicator in a target period, a technical indicator related to a change on a time axis of a financial indicator in and before a target period, and an expert indicator generated by processing a financial indicator in a target period by a predetermined rule.
10. The information provision apparatus according to supplementary note 9, wherein
   the output means outputs the screen that further displays a basis of growth and deterioration predictions after a target period of the target company by using at least one of a financial indicator in a target period, a technical indicator related to a change on a time axis of a financial indicator in and before a target period, and an expert indicator generated by processing a financial indicator in a target period by a predetermined rule
11. The information provision apparatus according to supplementary note 9 or 10, wherein
   the output means outputs the screen that further displays information indicating a transition of an evaluation score for each target period of the target company being computed based on at least one of a financial indicator in a target period, a technical indicator related to a change on a time axis of a financial indicator in and before a target period, and an expert indicator generated by processing a financial indicator in a target period by a predetermined rule.
12. The information provision apparatus according to any of supplementary notes 9 to 11, wherein
   the output means outputs the screen that further displays information indicating at least one another company whose state being determined based on at least one of a financial indicator in a target period, a technical indicator related to a change on a time axis of a financial indicator in and before a target period, and an expert indicator generated by processing a financial indicator in a target period by a predetermined rule is similar to the target company by equal to or more than a predetermined level.
13. The information provision apparatus according to any of supplementary notes 9 to 12, wherein
   the output means outputs the screen that further displays information comparing, with data about the target company, data about another company whose state being determined based on at least one of a financial indicator in a target period, a technical indicator related to a change on a time axis of a financial indicator in and before a target period, and an expert indicator generated by processing a financial indicator in a target period by a predetermined rule is similar to the target company by equal to or more than a predetermined level.
14. An information provision method, including,
   executing by a computer,
   an output step of outputting a screen that displays information being a material for evaluating a target company, and indicating growth and deterioration predictions after a target period of the target company being computed based on at least one of a financial indicator in a target period, a technical indicator related to a change on a time axis of a financial indicator in and before a target period, and an expert indicator generated by processing a financial indicator in a target period by a predetermined rule
15. A program causing a computer to function as
   an output means for outputting a screen that displays information being a material for evaluating a target company, and indicating growth and deterioration predictions after a target period of the target company being computed based on at least one of a financial indicator in a target period, a technical indicator related to a change on a time axis of a financial indicator in and before a target period, and an expert indicator generated by processing a financial indicator in a target period by a predetermined rule.

- 10: Information provision apparatus
- 11: Output unit
- 12: Reception unit
- 1A: Processor
- 2A: Memory
- 3A: Input/output I/F
- 4A: Peripheral circuit
- 5A: Bus

## Claims

1. An information provision apparatus, comprising:
reception means for receiving an input that selects at least one from among a plurality of pieces of material information being a material for evaluating a target company; and
output means for outputting, when a plurality of pieces of the material information are selected, a screen that displays a plurality of selected pieces of the material information side by side.

2. The information provision apparatus according to claim 1, wherein
a plurality of pieces of the material information include information indicating a transition of an evaluation score for each target period of the target company being computed based on at least one of a financial indicator in a target period, a technical indicator related to a change on a time axis of a financial indicator in and before a target period, and an expert indicator generated by processing a financial indicator in a target period by a predetermined rule.

3. The information provision apparatus according to claim 1 or 2, wherein
a plurality of pieces of the material information include information indicating growth and deterioration predictions after a target period of the target company being computed based on at least one of a financial indicator in a target period, a technical indicator related to a change on a time axis of a financial indicator in and before a target period, and an expert indicator generated by processing a financial indicator in a target period by a predetermined rule.

4. The information provision apparatus according to claim 3, wherein
a plurality of pieces of the material information include information indicating a basis of growth and deterioration predictions after a target period of the target company by using at least one of a financial indicator in a target period, a technical indicator related to a change on a time axis of a financial indicator in and before a target period, and an expert indicator generated by processing a financial indicator in a target period by a predetermined rule.

5. The information provision apparatus according to any one of claims 1 to 4, wherein
a plurality of pieces of the material information include information indicating at least one another company whose state being determined based on at least one of a financial indicator in a target period, a technical indicator related to a change on a time axis of a financial indicator in and before a target period, and an expert indicator generated by processing a financial indicator in a target period by a predetermined rule is similar to the target company by equal to or more than a predetermined level.

6. The information provision apparatus according to any one of claims 1 to 5, wherein
a plurality of pieces of the material information include information comparing, with data about the target company, data about another company whose state being determined based on at least one of a financial indicator in a target period, a technical indicator related to a change on a time axis of a financial indicator in and before a target period, and an expert indicator generated by processing a financial indicator in a target period by a predetermined rule is similar to the target company by equal to or more than a predetermined level.

7. An information provision method, comprising,
executing by a computer:
a reception step of receiving an input that selects at least one from among a plurality of pieces of material information being a material for evaluating a target company; and
an output step of outputting, when a plurality of pieces of the material information are selected, a screen that displays a plurality of selected pieces of the material information side by side.

8. A program causing a computer to function as:
reception means for receiving an input that selects at least one from among a plurality of pieces of material information being a material for evaluating a target company; and
output means for outputting, when a plurality of pieces of the material information are selected, a screen that displays a plurality of selected pieces of the material information side by side.

9. An information provision apparatus, comprising
output means for outputting a screen that displays information being a material for evaluating a target company, and indicating growth and deterioration predictions after a target period of the target company being computed based on at least one of a financial indicator in a target period, a technical indicator related to a change on a time axis of a financial indicator in and before a target period, and an expert indicator generated by processing a financial indicator in a target period by a predetermined rule.

10. The information provision apparatus according to claim 9, wherein
the output means outputs the screen that further displays a basis of growth and deterioration predictions after a target period of the target company by using at least one of a financial indicator in a target period, a technical indicator related to a change on a time axis of a financial indicator in and before a target period, and an expert indicator generated by processing a financial indicator in a target period by a predetermined rule.

11. The information provision apparatus according to claim 9 or 10, wherein
the output means outputs the screen that further displays information indicating a transition of an evaluation score for each target period of the target company being computed based on at least one of a financial indicator in a target period, a technical indicator related to a change on a time axis of a financial indicator in and before a target period, and an expert indicator generated by processing a financial indicator in a target period by a predetermined rule.

12. The information provision apparatus according to any one of claims 9 to 11, wherein
the output means outputs the screen that further displays information indicating at least one another company whose state being determined based on at least one of a financial indicator in a target period, a technical indicator related to a change on a time axis of a financial indicator in and before a target period, and an expert indicator generated by processing a financial indicator in a target period by a predetermined rule is similar to the target company by equal to or more than a predetermined level.

13. The information provision apparatus according to any one of claims 9 to 12, wherein
the output means outputs the screen that further displays information comparing, with data about the target company, data about another company whose state being determined based on at least one of a financial indicator in a target period, a technical indicator related to a change on a time axis of a financial indicator in and before a target period, and an expert indicator generated by processing a financial indicator in a target period by a predetermined rule is similar to the target company by equal to or more than a predetermined level.

14. An information provision method, comprising,
executing by a computer,
an output step of outputting a screen that displays information being a material for evaluating a target company, and indicating growth and deterioration predictions after a target period of the target company being computed based on at least one of a financial indicator in a target period, a technical indicator related to a change on a time axis of a financial indicator in and before a target period, and an expert indicator generated by processing a financial indicator in a target period by a predetermined rule.

15. A program causing a computer to function as
output means for outputting a screen that displays information being a material for evaluating a target company, and indicating growth and deterioration predictions after a target period of the target company being computed based on at least one of a financial indicator in a target period, a technical indicator related to a change on a time axis of a financial indicator in and before a target period, and an expert indicator generated by processing a financial indicator in a target period by a predetermined rule.
